# EUROPEAN PATENT SPECIFICATION

(11) **EP 4 575 507 B1**
(45) Date of publication and mention of the grant of the patent: **04.11.2026**
(21) Application number: 23219772.3
(22) Date of filing: 22.12.2023
(51) Int. Cl.: G01N 35/00, B25J 9/02, B25J 9/10, B25J 18/02

(54) **ROBOTIC SAMPLE HANDLING APPARATUS WITH A TELESCOPIC ARM**
ROBOTISCHE PROBENHANDHABUNGSVORRICHTUNG MIT EINEM TELESKOPISCHEN ARM
APPAREIL ROBOTIQUE DE MANIPULATION D'ÉCHANTILLONS AVEC UN BRAS TÉLESCOPIQUE

(43) Date of publication of application: 25.06.2025
(73) Proprietor: Tecan Trading AG, 8708 Männedorf (CH)
(72) Inventor: Strebel, Christian, 8606 Nänikon (CH); Leckebusch, Franziska, 8708 Männedorf (CH); Wassmer, Felix, 8305 Dietlikon (CH)
(74) Representative: DeltaPatents B.V.

(56) References cited:
- EP-A1- 3 588 099
- CN-A- 104 249 367
- US-A1- 2007 137 371

## Description

### TECHNICAL FIELD

The invention relates to a robotic sample handling apparatus for performing sample handling tasks in a laboratory environment. The apparatus is equipped with a robot arm which is positionable along a vertical axis and comprises a telescoping part for achievement of a large travel range in vertical direction.

### BACKGROUND ART

An example of a liquid handling apparatus comprising a positioning assembly with an extendable and retractable part is disclosed in EP3588099. The positioning assembly has a base part and holder part for holding an end-effector, such as a pipetting head. The base part comprises a linear displacement mechanism which is driven by a motor arranged on the base part. The base part and the holder part are arranged parallel to each other and are connected via a displaceable slide link, which is configured to engage with a first guide rail provided on the base part and on a second guide rail provided on the holder part, whereby each guide rail extends in vertical direction. The slide link is coupled to the displacement mechanism, which causes displacement of the slide link relative to the base part in vertical direction. The holder part is moveably coupled to the base part via a coupling arrangement which is configured such that linear displacement of the slide link relative to the base part in one direction causes linear displacement of the holder part relative to the slide link in the same linear direction.

In one embodiment, the coupling arrangement comprises a pulley bock system, whereby the base part is provided with first and second pulley sheaves and the slide link is provided with third and fourth pulley sheaves. The arrangement further comprises a belt, which is fixed to opposite ends of the holder part and is looped around the arrangement of first and second pulley sheaves on the base part and the third and fourth pulley sheaves on the slide link. The slide link may be attached to the belt and the first pulley sheave may be driven by the motor, such that rotation of the belt causes linear displacement of the slide link from e.g. a raised position to a lowered position. This causes rotation of the pulley sheaves on the slide link, leading to linear displacement of the holder part from e.g. a retracted position to an extended position.

The disclosed positioning assembly has a compact height, when in fully raised and retracted position, and allows an extensive travel range relative to its height. However, in apparatuses where a large travel range in absolute terms is required, e.g. greater than 50 cm, such a positioning assembly may be unsuitable for achieving this range and may be unsuitable for supporting the weight of an end-effector such as a gripper unit with parallel grippers and a rotation drive.

Furthermore, when the telescoping part of the arm has a long length and is supporting a relatively large load, there is a risk that when the arm is moved in a horizontal plane parallel to a work area of the apparatus, to suitably position e.g. an attached gripper unit over an item of lab-wear, with the telescoping part in an extended position, the telescoping part can act as a pendulum when the movement is stopped, due to the inertia of the attached load. The associated vibrations may take an unacceptably long time settle.

Consequently, there is room for improvement.

### SUMMARY OF INVENTION

The present invention defines a robotic sample handling apparatus for performing sample handling tasks in a laboratory environment, comprising a worktable for holding samples and a robot arm, which is controllable to be positioned in a horizontal XY plane parallel to the worktable and along a vertical Z-axis perpendicular to the worktable. The robot arm comprises a housing part and a first moving part that is slidingly mounted to the housing part, so as to be displaceable between a raised position and a lowered position. The first moving part will be referred to as an upper assembly of the robot arm and comprises a top plate and a base plate between which an arrangement of guide rods extends in vertical direction Z. The robot arm further comprises a telescoping part that is slidingly mounted to the upper assembly, so as to be displaceable between a retracted position and an extended position.

The arrangement of guide rods comprises at least one first guide rod, preferably two first guide rods, arranged at a first side of the upper assembly, which are suitably mounted to the housing part via a corresponding at least one first linear bearing through which the respective first guide rod extends. The arrangement of guide rods further comprises at least one second guide rod, preferably two second guide rods, arranged at a second side of the upper assembly, whereby the telescoping part is mounted to the upper assembly via a corresponding at least one second linear bearing through which the respective second guide rod extends. The linear bearings may be executed as sleeve bearings.

The telescoping part of the arm is suitably executed as flat plate, which has a length extending in Z-direction. The plate has a thickness, which extends in a direction which will be defined as the X-direction, and a width extending in a direction that will be defined as the Y-direction. The telescoping part of the arm will be referred to further as a telescoping plate. A lower region of the plate comprises mounting holes for attachment of an end-effector such as a gripper unit.

When the arm is moved in X-direction over the worktable of the apparatus, there is a particular risk of vibration when the movement stops, due to inertia of the attached end-effector. In order to mitigate this vibration, the upper assembly is provided with a stabilizer element. The stabilizer element is a separate part which is attached to the base plate and comprises a first contact surface that is arranged in contact with a first side of the telescoping plate and a second contact surface in contact with a second side of the telescoping plate, whereby the first and second sides of the telescoping plate define its thickness.

The telescoping plate slides on the second guide rods of the upper assembly via the second linear bearings. The stabilizer element, mounted to the base part, "holds" the telescoping plate between the first and second contact surfaces, providing stability and damping for reducing the amplitude and duration of vibrations.

The stabilizer element may be a machined metal part comprising two forks that make frictional contact with the first and second sides of the telescoping plate. A disadvantage of frictional contact is that there is a risk of debris, which might contaminate samples that are handled by the apparatus. The forks of the stabilizer element may be provided with a sliding bearing surface, for reducing friction and eliminating the risk of debris, but this would increase cost.

In a preferred embodiment, the stabilizer element is provided with first and second rollers, whereby the first and second contact surfaces are formed by an outer circumference of the rollers. This has the advantage of providing the necessary stabilizing contact in a low-friction manner using inexpensive components. The stabilizer element has a holder part which suitably comprises first and second mounting bores for receiving a pin on which the rollers are mounted. The mounting bores are spaced from each other in X-direction.

In a particularly preferred embodiment, the stabilizer element is configured to enable it to be mounted and fixed to the base part of the upper assembly in a manner that enables the position of the rollers to be adjusted such that contact between the rollers and the telescoping plate is ensured. One of the first and second rollers is mounted to the stabilizer element via an eccentric pin.

The eccentric pin has a cylindrical connection part that is received in one of the mounting bores in the holder part and which has a first centre axis. The eccentric pin further has a shaft part, on which the respective roller is mounted, which has second centre axis that is offset from the first centre axis of the cylindrical connection part.

Thus, rotation of the connection part of the eccentric pin within the mounting bore around the first centre axis, causes the second centre axis of the shaft part to describe a circle, enabling the mounted roller to be moved away from / towards the sides of the telescoping plate. One advantage of this embodiment is that when the stabilizer element is mounted to the base plate, such that the telescoping plate is arranged between the first and second rollers, the eccentric pin can be rotated within its mounting bore to a position that maximises the distance between the first and second rollers, thereby facilitating the assembly. The eccentric pin is then rotated to a position that brings the outer circumference of the associated roller into contact with the associated side of the telescoping plate and is then fixed in position. A further advantage of the aforementioned positional adjustment is that a correct degree of contact can be ensured, even when dimensional variations exist, due to manufacturing tolerances in e.g. the thickness of the telescoping plate, diameter of the rollers and a centre-to-centre distance of the mounting bores that are machined into the holder part of the stabilizer.

Each of the first and second rollers may be mounted on such an eccentric pin. Alternatively, one of the rollers may be a "fixed" roller, the position of which is not adjustable relative to stabilizer element. In this case, a connection part of the stabilizer element is suitably provided with at least one slot hole, via which the stabilizer element is attached to the base plate, thereby enabling a certain amount of positional adjustment of the stabilizer relative to the base plate in a direction towards and away from the telescoping plate. During assembly, the stabilizer is arranged such that the fixed roller is in contact with one side of the telescoping plate and is then fastened to the base plate in this position. The position of the roller mounted on the eccentric pin is then adjusted to bring it into contact with the other side of the telescoping plate and is fixed in position.

As will be understood, the apparatus is further equipped with a positioning system and a controller for controlling the position of the robot arm. The controller may be further configured to control the attached end effector.

The positioning system comprises an X-axis for enabling displacements in X-direction and a Y-axis, slidingly mounted to the X-axis, for enabling displacements in Y-direction. Suitably, a frame of the apparatus comprises a rear section that extends in X-direction and the apparatus has a support arm that extends in Y-direction, over the worktable, whereby the housing part of the telescopic robot arm is slidingly mounted to the support arm. In some embodiments, the apparatus has only one frame section that extends in X-direction and the support arm of the apparatus extends as a cantilever arm from the aforementioned frame section. In other embodiments, the apparatus frame also has a front section extending in X-direction, and the support arm is slidingly mounted to both the front section and the rear section.

The X-axis and the Y-axis of the positioning system further comprise an associated linear displacement mechanism. To effect displacement of the robot arm along the Z-axis, the robot arm is provided with a telescoping drive. In a preferred embodiment, the telescoping drive includes a motor and an arrangement of an active belt and a passive belt, whereby the active belt is directly driven by the motor and the passive belt is driven via displacement of the upper assembly of the robot arm relative to the housing part.

Suitably, the motor is mounted in connection with the housing part and has an output shaft which drives a sprocket, which may be rotationally coupled to the output shaft. The active belt may be a toothed belt which engages with teeth on an outer circumference of the sprocket, whereby one end of the toothed belt is fixed to the top plate and an opposite end is fixed to the base plate of the upper assembly. The passive belt is a closed loop belt, which may be a flat belt or a toothed belt, that is looped around a first pulley sheave rotationally mounted to the top plate and a second pulley sheave rotationally mounted to the base plate. The telescoping plate is fixed to the passive belt.

Thus, actuation of the motor enables the upper assembly to be displaced from a raised position to a lowered position and this displacement causes rotation of the passive belt, enabling the telescoping plate to be displaced from a retracted position to an extended position. There is no need for a second motor, mounted to a moving part of the robot arm, for effecting displacement of the telescoping plate.

The described robot arm and telescoping drive make it possible to achieve a large travel range in vertical direction Z. In preferred embodiments, the travel range between a first position, in which the upper assembly is fully raised and the telescoping plate is fully retracted, and a second position, in which the upper assembly is fully lowered and the telescoping plate is fully extended, lies between 40 and 70 cm.

In one embodiment, the worktable of the apparatus has a main work area for holding samples and further comprises a cut-out region that extends through to an underside of the worktable. The travel range allowed by the robot arm is sufficient for a lower end of the telescoping plate to extend below the underside of the worktable. A further sample handling device or analysis device such as microplate reader may therefore be arranged below the worktable, allowing an efficient use of laboratory space, and e.g. an attached gripper unit is able to deposit and pick up a microplate containing samples for interaction with the reader.

In other embodiments, the worktable may be stepped and have main working area at a first height and a secondary working area at a lower height, whereby the robot arm is positionable in the XY plane over both working areas.

A robotic sample handling apparatus comprising a telescoping arm in accordance with the invention enables a large range of travel in vertical direction and enables rapid displacements to be performed in horizontal direction, over the main working area of the apparatus, without adversely affecting the efficiency and speed of handling tasks.

### BRIEF DESCRIPTIONS OF DRAWINGS

These and other aspects of the invention are apparent from and will be elucidated with reference to the embodiments described hereinafter with reference to the accompanying drawings in which:
- Fig. 1a: shows a perspective view of an example of a robot handling apparatus, for microplate handling, according to the invention comprising a telescoping robot arm;
- Fig. 1b: shows a perspective view the robot arm of Fig. 1a in a fully raised and retracted position, mounted on a support arm of the apparatus;
- Fig. 1c: shows a perspective view of the robot arm in a fully lowered and extended position;
- Fig. 2a: schematically shows a front cross-sectional view of a robot arm, in raised and retracted position, with components of a telescoping drive;
- Fig. 2b: shows the robot arm of Fig. 2a in a lowered and extended position;
- Fig. 3a: shows an enlarged perspective view of a part of the robot arm of Figs. 1a-1c with an attached stabilizer element;
- Fig. 3b: shows an exploded view of components of the stabilizer element, including an eccentric pin;
- Fig. 3c: shows a side view of the eccentric pin;
- Fig. 3d: shows a cut perspective view of the stabilizer element with assembled components.
- Fig. 4: shows a perspective view of a further example of a stabilizer element.

It should be noted that items which have the same reference numbers in different Figures, have the same structural features and the same functions. Where the function and/or structure of such an item has been explained, there is no necessity for repeated explanation thereof in the detailed description.

### DETAILED DESCRIPTION OF EMBODIMENTS

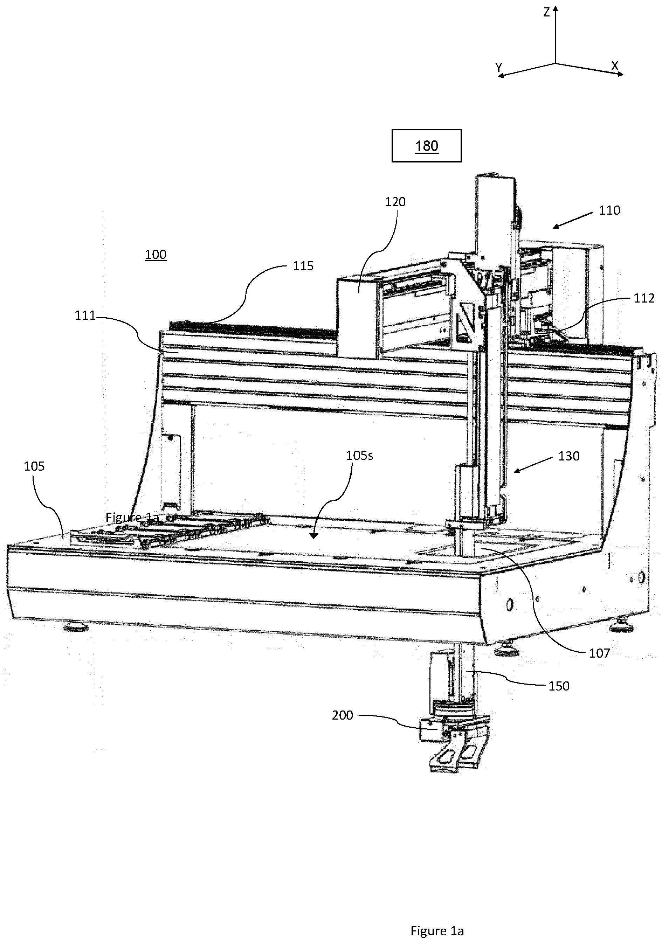

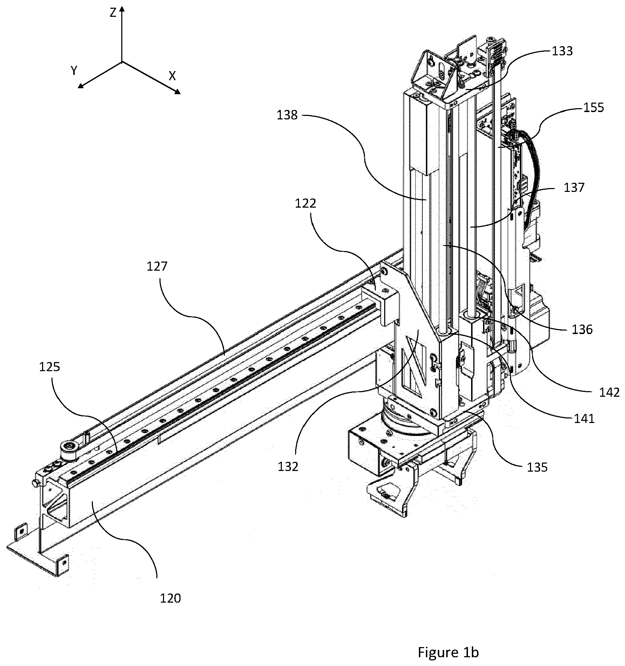

An example of a robotic sample handling apparatus according the invention is shown in Fig. 1a. The apparatus 100 comprises a worktable 105 having an upper surface 105s that serves as a main work area for holding samples, where, for example, multi-well microplates and other items of lab-wear may be arranged. The apparatus is further equipped with a 3-axis positioning system 110 comprising a robot arm 130, which is controllable, by a controller 180, to be positioned in a horizontal plane parallel to the worktable 105 and along a vertical axis perpendicular thereto. For ease of reference, the horizontal plane will be referred to as an XY plane and as being defined in an XYZ coordinate system, whereby the vertical or Z-axis of the coordinate system is aligned with the direction of gravity. The positioning system includes an X-axis for effecting positional adjustment of the robot arm in X-direction, comprising a linear displacement mechanism in connection with, for example, a carriage part 112 that runs on a rail 115, extending in X-direction, that is provided on a frame section 111 at a rear side of the apparatus. The positioning system further includes a Y-axis for effecting positional adjustment of the robot arm in Y-direction, and comprises a support arm 120 extending in Y-direction, which is mounted to the X-axis. The robot arm 130 is mounted to the Y-axis via e.g. a sliding carriage 122 which runs on a rail 125 provided on the support arm 120 (refer Fig. 1b). The Y-axis further comprises a linear displacement mechanism such as a belt 127 to which the sliding carriage 122 is connected.

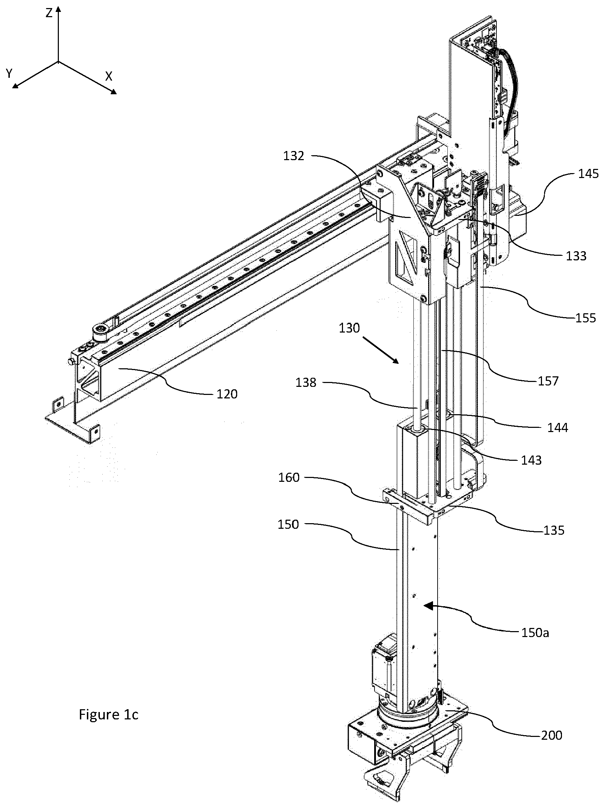

The robot arm 130 is extendable between a fully raised position, as shown in Fig. 1b, and a fully lowered position, as shown in Figs. 1a and 1c.

The robot arm 130 is configured for attachment of an end-effector that is used in sample handling tasks. In the depicted example, the attached end-effector is a gripper unit 200 comprising parallel grippers for picking up items of lab-wear. In the depicted example, the worktable is provided with a cut-out region 107 that extends through the worktable to an underside thereof. This allows other sample handling devices or analysis devices to be arranged underneath the worktable 105 and enables the gripper unit 200 to access such a device. An example of a device that may be arranged underneath the worktable is a microplate reader for detecting optical properties of fluids. As shown in Fig. 1a, where the robot arm is in a fully lowered position, the robot arm 130 is extendable in Z-direction by an amount that enables a lower end of the arm to extend below the underside of the worktable 105 when suitably positioned above the cut-out region 107.

Consequently, the robot arm 130 has a relatively large range or travel along the Z-axis. In the depicted example, the working range between the fully raised position (refer Fig. 1b) and the fully lowered position (Refer Fig. 1c), is 56 cm. In a conventional apparatus, the Z-axis of the robot arm often comprises a lead screw for positional adjustments in vertical direction. A lead screw of such length would require the robot arm, in fully raised position, to extend far above the frame section of the apparatus that extends in X-direction. The overall height of the apparatus would be increased, making such an apparatus potentially unsuitable for the available workspace in a laboratory.

In order to enable a more compact arrangement, the robot arm in an apparatus according to the invention is executed as a telescopic arm and comprises a telescoping drive for positional adjustment along the Z-axis.

With reference to Figures 1b and 1c, the robot arm comprises a housing part 132 that is fixedly mounted to the sliding carriage 122 which runs on the rail 125 provided on the support arm 120. The robot arm 130 has a first moving part, that is displaceable relative to the housing part 132, and which will be referred to as an upper assembly of the robot arm. The upper assembly comprises a top plate 133 and a base plate 135 between which an arrangement of four guide rods extend in vertical direction Z. The arrangement of guide rods comprises a set of two first guide rods 136, 137, spaced from each other in Y-direction, and a set of two second guide rods spaced from each other in Y-direction (only one of these rods 138 is visible in Figs 1b and 1c). The first and second guide rods are spaced from each other in X-direction. The upper assembly is slidingly mounted to the housing part 132 via a set of first sleeve bearings 141, 142 through which the corresponding first guide rod 136, 137 extends.

The robot arm further comprises a telescoping part 150 that is extendable and retractable relative to the upper assembly. The telescoping part is suitably executed as a flat, plate-like element with a length extending in Z-direction, a width extending in Y-direction and a thickness extending in X-direction, in the depicted XYZ coordinate system. The telescoping part will be referred to further as a telescoping plate 150, and is slidingly mounted to the upper assembly via a set of two second sleeve bearings 143, 144, through which the corresponding second guide rod 138 extends. Suitably, a first side 150a of the plate is connected to a housing of the second sleeve bearings 143, 144, at an upper region of the telescoping plate 150.

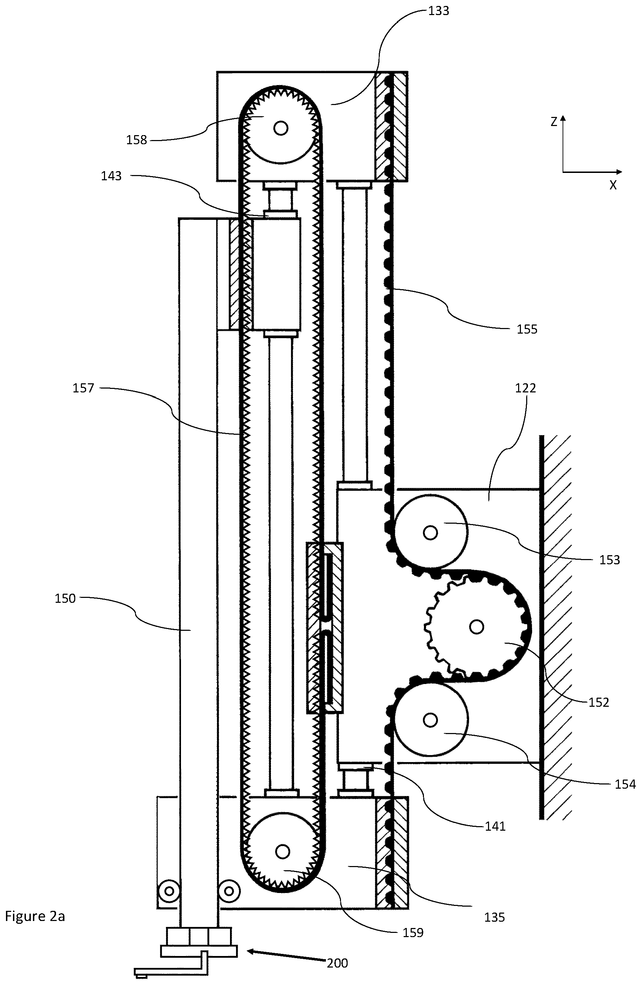

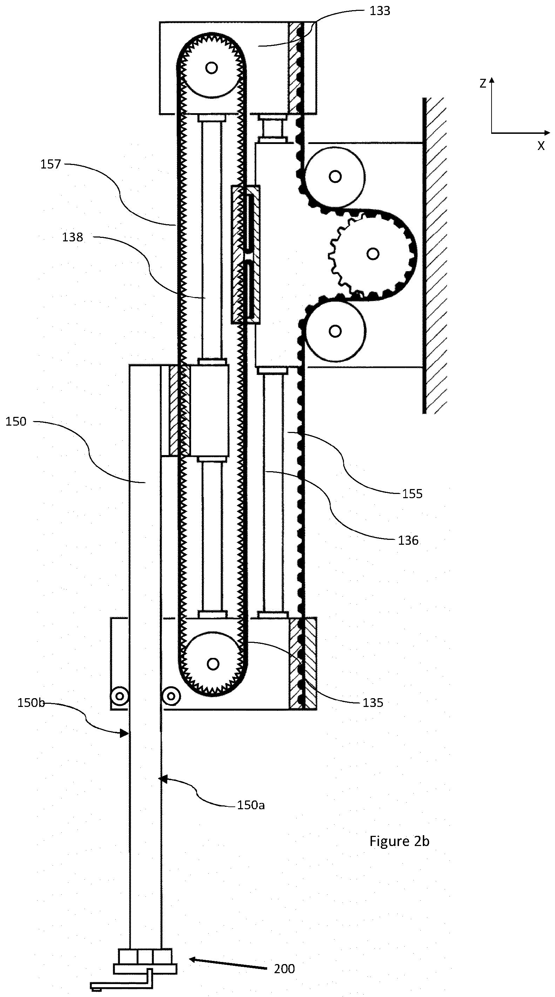

To effect sliding displacement of the upper assembly (on the first guide rods 136, 137) and of the telescoping plate 150 (on the second guide rods 138), a motor 145 is provided which drives an arrangement of an active belt 155, which is directly driven by the motor, and a passive, indirectly-driven belt 157. This will be explained with additional reference to Figs 2a and 2b.

The motor 145 is mounted in connection with the housing part 132 of the robot arm and comprises an output shaft to which a sprocket 152 is rotationally coupled. The active belt 155 may be a toothed belt that engages with teeth of the sprocket 152, whereby one end of the toothed belt is fixed to the top plate 133 and an opposite end is fixed to the base plate 135 of the upper assembly. In addition to the sprocket 152, the active belt drive suitably comprises first and second idling rollers 153, 154, which are rotationally mounted to the housing part 132.

The robot arm is further provided with a passive belt drive, formed by a closed loop belt 157, which is mounted around upper and lower pulley sheaves. The passive belt may be a flat belt or a toothed belt 157, as shown in Figs. 2a and 2b. The upper sheave 158 is rotationally mounted to the top plate 133 and the lower sheave 159 is rotationally mounted to the base plate 135. The telescoping plate 150 is connected to the passive belt 157, such that rotation of the passive belt causes linear displacement of the telescoping plate150.

In Fig. 2a, the arm is shown in a fully raised and retracted position, in which the base plate 135 of the upper assembly is arranged in proximity to the housing part 132 and an upper end of the second sleeve bearings 143, 144 (to which the telescoping plate 150 is connected) is arranged in proximity to the top plate 133. When the motor is activated to rotate the sprocket 152 (in clockwise direction in the depicted view), the upper assembly of the arm comprising the top plate 133, base plate 135 and four guide rods 136, 137, 138, is caused to slide downwards relative to the housing part 132. This displacement in Z-direction causes rotation of the passive toothed belt 157 (in anticlockwise direction in the depicted view), which in turn effects displacement of the telescoping plate 150 in downward direction, relative to the upper assembly. Fig. 2b shows the robot arm in a lowered position, with the telescoping plate 150 in an extended position.

The robot arm can thus be lowered and the telescopic part extended via actuation of one motor that may be mounted in connection with the fixed housing part 132 of the arm. The described arrangement further enables relatively large loads to be carried of between 450 g and 1600 g, which enables a gripper unit having parallel gripper fingers and a rotation drive to be supported on the telescoping plate.

A lower region of the telescoping plate 150 is suitably provided with mounting holes such that the gripper unit 200 may be e.g. bolted to the plate. As mentioned, the gripper unit has parallel grippers which can be moved towards each other and away from each other to pick up and release an item of lab-wear such as a multi-well microplate. The gripper unit 200 may further comprise a rotation drive, which is used, after pick-up, to rotate an item through at least 90 degrees, thereby enabling the orientation of e.g. a multi-well microplate to be changed from a lengthwise or "landscape" orientation to a transverse or "portrait" orientation. It can be necessary to change the orientation of the microplate, to enable the microplate to be loaded into a further device such as a microplate reader that is arranged below the main work area of the apparatus, as described above.

When the telescoping plate of the robot arm is in an extended position and the arm is moved in X-direction and/or Y-direction, to suitably position the attached gripper unit 200 in the XY-plane over the main work area of the worktable 105, there is a risk that when the aforementioned movement is stopped, the telescoping plate 150 is caused to swing, similar to a pendulum, due to the inertia of the attached gripper unit. The risk is particularly high for movements in X-direction, which is the direction that defines the thickness of the plate. A gripping action can be reliably performed only after the plate 150 and attached gripper unit 200 have come to rest and associated vibrations have ceased. It is thus beneficial to minimize the amount of 'settling' time needed for the vibrations to cease, to enable efficient performance of handling tasks using the gripper unit.

The robot arm is therefore equipped with a stabilizer element for reducing the amplitude of vibrations, as well as the settling time. The stabilizer element is arranged at the base plate 135 and has a first contact surface that makes contact with the first side 150a of the telescoping plate and a second contact surface that makes contact with a second side 150b (refer Fig. 2b) of the telescoping plate 150. The telescoping plate is thus held at both sides, in a manner that permits movement of the telescoping plate 150 relative to the base plate 135. In the robot arm schematically depicted in Figs. 2a and 2b, the telescoping plate is shown to extend through an opening in the base plate 135. The holding contact may be provided by first and second surfaces of the opening. This would require extremely precise machining of the base plate.

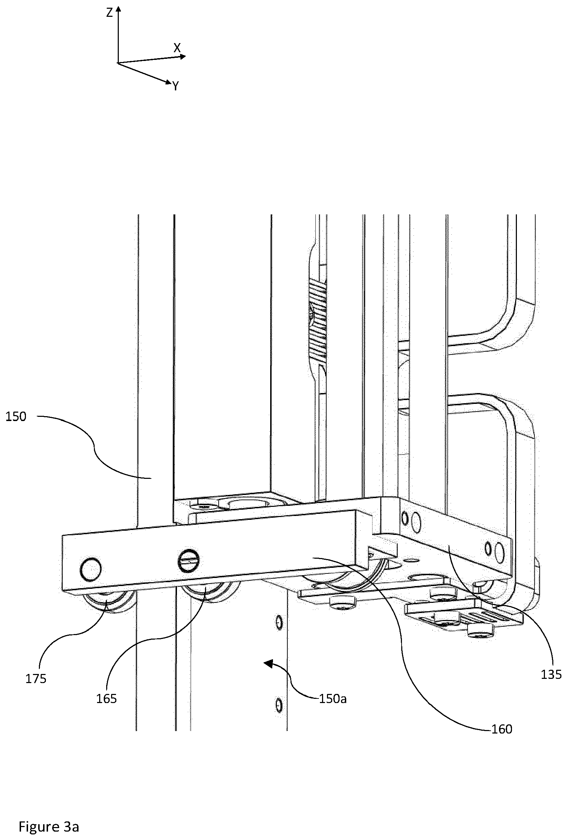

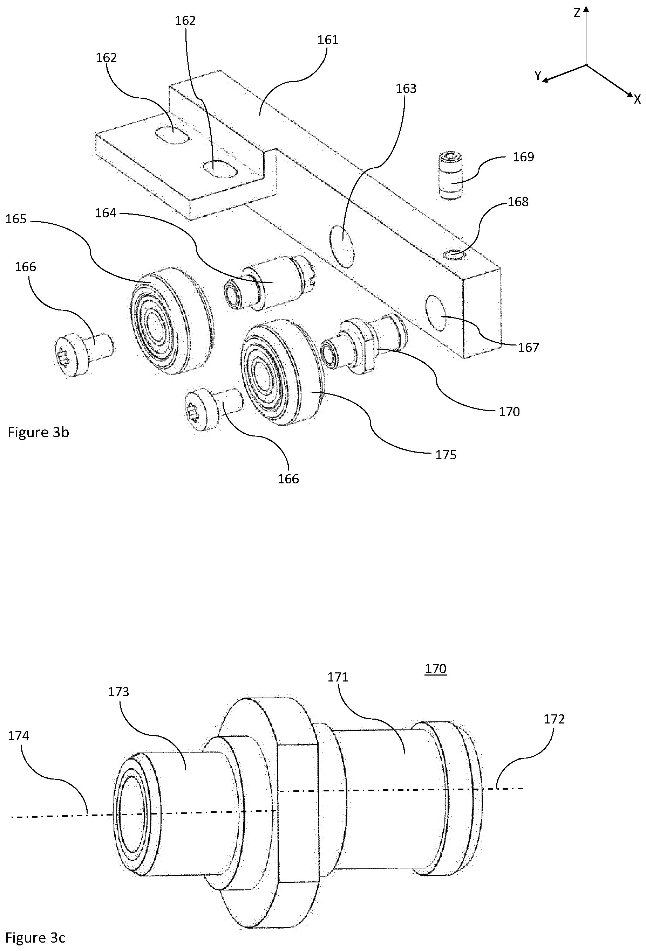

The stabilizer element is thus executed as a separate part that is attached to the base plate after the telescoping plate has been mounted to the upper assembly of the robot arm. A preferred example of a stabilizer element 160 is depicted in Figure 3a, which shows a perspective view of part of the telescoping plate 150 and a lower region of the upper assembly of the robot arm, comprising the base plate 135. The stabilizer element 160 is attached to an underside of the base plate 135 and has first and second rollers 165, 175 arranged at either side (in X-direction) of the telescoping plate 150. An exploded view of components of the stabilizer element 160 is shown in Fig. 3b.

The stabilizer element 160 comprises an elongated body or holder 161, which has an extension (extending in Y-direction), whereby the extension is provided with at least one mounting hole 162, for attaching the holder 161 to the underside of the base plate 135. Preferably, two mounting holes 162 are provided, which are executed as slot openings, to enable a certain degree of positional adjustment of the holder 161 relative to the base plate 135 in X-direction. The holder is further provided with first and second mounting bores 163, 167 for receiving a corresponding first pin 164 and a second pin 170 on which the first and second rollers 165, 175 are respectively mounted. The rollers suitably comprise a rotational bearing such as ball bearing, whereby a wheel element made of a suitably polymer material is fixed to an outer ring of the bearing, and an inner ring of the bearing is fixed on a hollow shaft part of the corresponding pin via a corresponding fastener 166.

The holder 161 is mounted to the base plate 135 such that an outer circumference of the rollers is in contact with the first 150a and second side 150b of the telescoping plate 150. This contact provides stabilization and reduces vibrations when the plate 150 is in an extended position and is stopped after a displacement in X-direction. During extension and retraction of the telescoping plate 150, the contact between the rollers and the plate causes rotation of the rollers and allows movement of the telescoping plate in a low friction manner. As will be understood, contact must be achieved in order to provide stabilization, but must not be so high that movement of the plate in vertical direction Z is hampered. Consequently, a precise positional adjustment of the rollers 165, 175 relative to the plate 150 in X-direction is desirable, to ensure a correct degree of contact between the outer circumference of the rollers and the telescoping plate 150. Factors which influence the degree of contact, or lack thereof, include the diameter of the rollers, the centre-to-centre distance of the first and second mounting bores 163, 167 and the thickness of the plate 150. The telescoping plate has a uniform thickness, but in practice the thickness of plates manufactured in the same batch may vary somewhat. Likewise, the diameter of the rollers and the centre-to-centre distance of the mounting bores 163, 167 machined into the holder 161 are subject to manufacturing tolerances. In order to mitigate the effects of a chain of tolerances, one of the rollers is mounted to the holder in a manner that enables its position to be adjusted in X-direction. In addition, the running surface of the rollers 165, 175 on the telescopic plate may be specially tolerance.

In the example depicted in Figs 3a and 3b, the 1^{st} roller 165 mounted on the shaft part of the corresponding 1^{st} pin 164 has a rotation axis that coincides with a centre axis of the pin 164. When the stabilizer 160 is attached to the base plate 135 via the mounting slots 162, the holder 161 is fixed in a position, using e.g. a screw connection, in which the outer circumference of the 1^{st} roller 165 is in contact with the first side 150a of the telescoping plate 150. To enable positional adjustment of the second roller 175, the second pin 170 is executed as an eccentric pin, whereby a larger view of this pin is shown in Fig 3c. The eccentric pin 170 has a cylindrical connection part 171 that is received in the corresponding mounting bore 167. The connection part 171 has a first centre axis 172. The shaft part 173 of the eccentric pin 170, on which the 2^{nd} roller 175 is mounted, has a second centre axis 174, which is offset somewhat from the first centre axis 172. The connection part 171 of the eccentric pin 170 is rotatable within its mounting bore 167. Rotation of the pin 170 around the first centre axis 172 causes the second centre axis 174, being the rotation axis of the 2^{nd} roller 175, to describe a circle, thereby enabling the roller to be moved towards / away from the 2^{nd} side 150b of the telescoping plate.

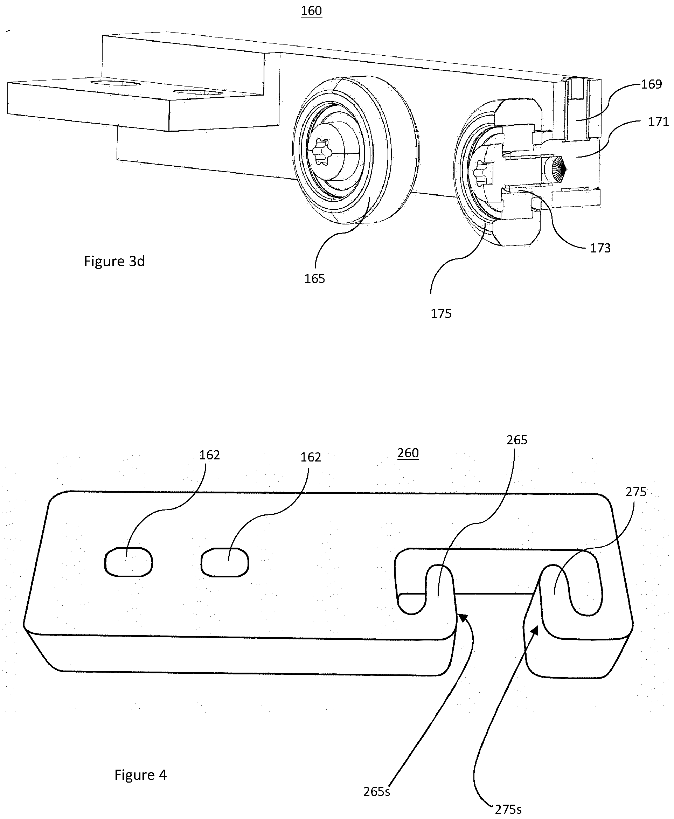

During mounting of the assembled stabilizer 160, the connection part 171 of eccentric pin may be rotated to a position that maximizes the centre-to-centre distance between the first and second rollers, enabling the telescoping plate to be easily accommodated therebetween. After fixation of the holder 161 to the base plate 135, the connection part 171 of the eccentric pin is then rotated to a position in which the outer circumference of the 2^{nd} roller 175 is brought into contact with the second side 150b of the telescoping plate 150, and is then fixed in this position. Fixation may occur using e.g. an Allen screw 169 that is received in a fixation hole 168 that extends in vertical direction through to the mounting bore 167. Figure 3d shows the stabilizer element 160 in assembled condition, with a cut through the eccentric pin and the vertical fixation hole.

After the holder 161 has been attached to the base plate 135, with the position of the first and second rollers adjusted to achieve contact with the telescoping plate as described above, vibration of telescoping plate with attached gripper unit can be significantly reduced. In tests conducted using the robot arm without the stabilizer element, in which the robot arm 130 was moved in X-direction over the main worktable area of an apparatus such as shown in Fig. 1a, in a partially extended position in Z-direction and with a position in Y-direction towards the front of the apparatus, vibrations with an amplitude of approx. 2 mm were measured after stopping a movement of the arm, which took between 1 and 2 seconds to settle. In the test, the arm was moved at a speed of 7500 mm/s and with an acceleration of 1000 mm/s². When testing was repeated with attached stabilizer element, the amplitude of vibration was reduced to < 0.1 mm, with a setting time of approx. 0.1 seconds.

A further example of a stabilizer element that may be attached to the base plate of the upper assembly of the robot arm is shown in Fig. 4. The stabilizer element 260 is a metal part comprising first and second forks 265, 275 that are machined into a main body of the stabilizer element. The first and second forks are spaced from each other in the direction of the thickness of the telescopic plate 150 (X-direction) and have a corresponding first contact surface 265s and a corresponding second contact surface 275s between which the telescoping plate is held when the stabilizer element 260 is fixed to the base plate 135. Suitably, the main body of the stabilizer element is provided with two mounting holes in the form of slot openings 162, for enabling a certain amount of positional adjustment of the stabilizer relative to the base plate in X-direction. In mounted condition, the first and second sides of the telescoping plate are in frictional contact with the corresponding contact surfaces of the forks 265, 275, which provides additional stiffness for reducing vibrations, as described above.

The first and second forks 265, 275 may be somewhat spring-loaded, such that corresponding contact surfaces 265s, 275s are pressed against the first and second sides of the telescoping plate. To reduce friction between the telescoping plate and the forks during extension and retraction of the plate 150, the contact surfaces 165s, 175s of the forks may be provided with a low-friction coating. Alternatively, the forks may be made from, or provided with a layer of, a low-friction material such as Polyoxymethylene (POM) or any other suitable plastic or ceramic material.

Thus, a robotic sample handling apparatus comprising a telescoping arm in accordance with the invention enables rapid displacements in horizontal direction to be performed, without adversely affecting the efficiency and speed of handling tasks.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims.

### Reference numerals

- 100: robotic sample handling apparatus
- 105: worktable
- 105s: upper surface of worktable
- 107: cut-out region in worktable
- 110: 3-axis positioning assembly
- 111: frame part of apparatus which supports positioning assembly
- 112: first sliding carriage mounted on frame part
- 115: rail extending X-direction
- 120: support arm extending in Y-direction
- 122: second sliding carriage mounted on support arm
- 125: rail on support arm
- 127: belt on support arm
- 130: robot arm
- 132: housing part of arm
- 133: top plate of an upper assembly of the robot arm
- 135: base plate
- 136, 137, 138: guide rods extending between top plate and base plate
- 141, 142: first linear bearing
- 143, 144: second linear bearing
- 145: motor
- 150: telescoping plate
- 152: sprocket rotationally mounted to housing part of arm
- 153, 154: idlers
- 155: active belt
- 157: passive belt
- 158: 1^{st} pulley sheave rotationally mounted to top plate
- 159: 2^{nd} pulley sheave rotationally mounted to base plate
- 160, 260: stabilizer element
- 161: holder part of stabilizer
- 162: mounting slot
- 163: 1^{st} mounting bore in holder
- 164: 1^{st} pin
- 165: 1^{st} roller
- 166: fixation screw
- 167: 2^{nd} mounting bore in holder
- 168: vertical fixation hole that extends through to 2^{nd} mounting bore
- 169: fixation element received in vertical fixation hole
- 170: eccentric pin
- 171: cylindrical connection part of eccentric pin
- 172: centre axis of connection part
- 173: hollow shaft part of eccentric pin
- 174: centre axis of shaft part
- 175: 2^{nd} roller
- 180: controller
- 200: gripper unit
- 265: first fork of stabilizer element
- 265s: first contact surface of first fork
- 275: second fork of stabilizer element
- 275s: second contact surface of first fork

## Claims

1. A robotic sample handling apparatus (100) for performing sample handling tasks in a laboratory environment, comprising a worktable (105) for holding samples and a robot arm (130) which is controllable to be positioned in a horizontal XY plane parallel to the worktable and along a vertical Z-axis perpendicular to the worktable,
wherein the robot arm comprises:
- a housing part (132);
- an upper assembly comprising a top plate (133), a base plate (135) and an arrangement of at least one first guide rod (136, 137) and at least one second guide rod (138), which guide rods extend in vertical direction Z between the top plate and the base plate, whereby the upper assembly is slidingly mounted to the housing part (132) via a corresponding at least one first linear bearing (141, 142) through which the corresponding first guide rod (136,137) extends; and
- a telescoping plate (150) that is slidingly mounted to the upper assembly of the robot arm, via a corresponding at least one second linear bearing (143, 144) through which the corresponding second guide rod (138) extends;
**characterized in that** the robot arm (130) further comprises a stabilizer element (160, 260) mounted to the base plate (135), whereby the stabilizer element comprises a first contact surface (265s) in contact with a first side (150a) of the telescoping plate and a second contact surface (275s) in contact with a second side (150b) of the telescoping plate, whereby the first and second sides (150a, 150b) define a thickness of the telescoping plate (150).

2. The robotic sample handling apparatus (100) according to claim 1, wherein the stabilizer element (160) is provided with first and second rollers (165, 175) and wherein the first and second contact surfaces are respectively formed by an outer circumference of the first and second rollers.

3. The robotic sample handling apparatus (100) according to claim 2, wherein one of the first and second rollers (165, 175) is mounted to the stabilizer element (160) via an eccentric pin (170) and wherein:
- the eccentric pin has a shaft part (173) on which the roller is mounted and a cylindrical connection part (171) that is received in a mounting bore (167) provided in the stabilizer element; and
- the shaft part (173) of the eccentric pin has a centre axis (174) that is offset from a centre axis (172) of the cylindrical connection part (171).

4. The robotic sample handling apparatus (100) according to claim 1, wherein the stabilizer element (260) comprises a first fork (265) on which the first contact surface (265s) is provided and comprises a second fork (275) on which the second contact surface (275s) is provided.

5. The robotic sample handling apparatus (100) according to claim 4, wherein the first and second forks (265, 275) are somewhat spring-loaded, such that corresponding first and second contact surfaces (265s, 275s) are pressed against the first and second sides of the telescoping plate (150).

6. The robotic sample handling apparatus (100) according to any preceding claim, wherein the stabilizer element (160) is mounted to the base plate (135) via at least one slot opening (162) for enabling a positional adjustment of the stabilizer element relative to the base plate (135) in a direction towards and away from the first and second sides of the telescoping plate (150).

7. The robotic sample handling apparatus (100) according to any preceding claim, further comprising a positioning system (110), the positioning system comprising an X-axis and a Y-axis, for positional adjustment of the robot arm (130) in X- and Y-direction respectively, whereby the Y-axis is slidingly mounted to the X-axis and the robot arm (130) is slidingly mounted to the Y-axis.

8. The robotic sample handling apparatus (100) according to any preceding claim, further comprising a motor (145) in fixed connection with the housing part (132) of the robot arm (130) and a sprocket (152) rotationally driven by an output shaft of the motor (145), wherein the robot arm is further provided with:
- an active belt (157) which engages with teeth on an outer circumference of the sprocket (152), whereby a first end of the active belt (155) is fixed to the top plate (133) a second end of the active belt is fixed to the base plate (135); and
- a closed-loop passive belt (157) that is looped around a first pulley sheave (158) rotationally mounted to the top plate (133) and a second pulley sheave (159) rotationally mounted to the base plate (135);
wherein the telescoping plate (150) is fixedly attached to the passive belt (157).

9. The robotic sample handling system (100) of any preceding claim, wherein the robot arm (130) has a travel range in vertical direction Z, between a fully raised and retracted position and a fully lowered and extended position, of between 40 and 70 cm.

10. The robotic sample handling apparatus (100) of any preceding claim, wherein the worktable (105) has an upper surface (105s) that serves as a main working area for holding samples, and is further provided with a cut-out region (107) that extends through to an underside of the worktable.

11. The robotic sample handling apparatus (100) of any preceding claim, further comprising a gripper unit (200) attached to the telescoping plate (150) at a lower region thereof.

## Patentansprüche

1. Roboterprobenhandhabungsvorrichtung (100) zum Durchführen von Probenhandhabungsaufgaben in einer Laborumgebung, umfassend einen Arbeitstisch (105) zum Halten von Proben und einen Roboterarm (130), der steuerbar ist, um in einer horizontalen XY-Ebene parallel zum Arbeitstisch und entlang einer vertikalen Z-Achse senkrecht zum Arbeitstisch positioniert zu werden,
wobei der Roboterarm Folgendes umfasst:
- einen Gehäuseteil (132);
- eine obere Baugruppe, die eine Deckplatte (133), eine Grundplatte (135) und eine Anordnung von mindestens einer ersten Führungsstange (136, 137) und mindestens einer zweiten Führungsstange (138) umfasst, wobei sich die Führungsstangen in vertikaler Richtung Z zwischen der Deckplatte und der Grundplatte erstrecken, wobei die obere Baugruppe über ein entsprechendes mindestens ein erstes Linearlager (141, 142), durch das sich die entsprechende erste Führungsstange (136, 137) erstreckt, verschiebbar am Gehäuseteil (132) montiert ist; und
- eine Teleskopplatte (150), die über ein entsprechendes mindestens ein zweites Linearlager (143, 144), durch das sich die entsprechende zweite Führungsstange (138) erstreckt, verschiebbar an der oberen Baugruppe des Roboterarms montiert ist;
**dadurch gekennzeichnet, dass** der Roboterarm (130) ferner ein Stabilisierungselement (160, 260) umfasst, das an der Grundplatte (135) montiert ist, wobei das Stabilisierungselement eine erste Kontaktfläche (265s) in Kontakt mit einer ersten Seite (150a) der Teleskopplatte und eine zweite Kontaktfläche (275s) in Kontakt mit einer zweiten Seite (150b) der Teleskopplatte umfasst, wobei die erste und zweite Seite (150a, 150b) die Dicke der Teleskopplatte (150) definieren.

2. Roboterprobenhandhabungsvorrichtung (100) nach Anspruch 1, wobei das Stabilisierungselement (160) mit einer ersten und zweiten Rolle (165, 175) versehen ist und wobei die erste und zweite Kontaktfläche jeweils durch einen Außenumfang der ersten und zweiten Rolle ausgebildet sind.

3. Roboterprobenhandhabungsvorrichtung (100) nach Anspruch 2, wobei eine der ersten und zweiten Rolle (165, 175) über einen Exzenterstift (170) am Stabilisierungselement (160) montiert ist und wobei:
- der Exzenterstift einen Wellenteil (173), auf dem die Rolle montiert ist, und einen zylindrischen Verbindungsteil (171), der in einer im Stabilisierungselement vorgesehenen Montagebohrung (167) aufgenommen ist, aufweist und
- der Wellenteil (173) des Exzenterstifts eine Mittelachse (174) aufweist, die von der Mittelachse (172) des zylindrischen Verbindungsteils (171) versetzt ist.

4. Roboterprobenhandhabungsvorrichtung (100) nach Anspruch 1, wobei das Stabilisierungselement (260) eine erste Gabel (265) umfasst, auf der die erste Kontaktfläche (265s) vorgesehen ist, und eine zweite Gabel (275) umfasst, auf der die zweite Kontaktfläche (275s) vorgesehen ist.

5. Roboterprobenhandhabungsvorrichtung (100) nach Anspruch 4, wobei die erste und zweite Gabel (265, 275) etwas federbelastet sind, sodass die entsprechende erste und zweite Kontaktfläche (265s, 275s) gegen die erste und zweite Seite der Teleskopplatte (150) gedrückt werden.

6. Roboterprobenhandhabungsvorrichtung (100) nach einem der vorhergehenden Ansprüche, wobei das Stabilisierungselement (160) über mindestens eine Schlitzöffnung (162) an der Grundplatte (135) montiert ist, um eine Positionseinstellung des Stabilisierungselements relativ zur Grundplatte (135) in eine Richtung zu und weg von der ersten und zweiten Seite der Teleskopplatte (150) zu ermöglichen.

7. Roboterprobenhandhabungsvorrichtung (100) nach einem der vorhergehenden Ansprüche, ferner umfassend ein Positionierungssystem (110), wobei das Positionierungssystem eine X-Achse und eine Y-Achse umfasst, zur Positionseinstellung des Roboterarms (130) in X- bzw. Y-Richtung, wobei die Y-Achse verschiebbar an der X-Achse montiert ist und der Roboterarm (130) verschiebbar an der Y-Achse montiert ist.

8. Roboterprobenhandhabungsvorrichtung (100) nach einem der vorhergehenden Ansprüche, ferner umfassend einen Motor (145) in fester Verbindung mit dem Gehäuseteil (132) des Roboterarms (130) und ein Kettenrad (152), das durch eine Ausgangswelle des Motors (145) zur Drehung angetrieben wird, wobei der Roboterarm ferner mit Folgendem versehen ist:
- einem aktiven Riemen (157), der mit Zähnen an einem Außenumfang des Kettenrads (152) in Eingriff steht, wobei ein erstes Ende des aktiven Riemens (155) an der Deckplatte (133) befestigt ist und ein zweites Ende des aktiven Riemens an der Grundplatte (135) befestigt ist; und
- einem passiven Endlosriemen (157), der um eine erste Riemenscheibe (158), die drehbar an der Deckplatte (133) montiert ist, und eine zweite Riemenscheibe (159), die drehbar an der Grundplatte (135) montiert ist, geschlungen ist;
wobei die Teleskopplatte (150) am passiven Riemen (157) fest angebracht ist.

9. Roboterprobenhandhabungssystem (100) nach einem der vorhergehenden Ansprüche, wobei der Roboterarm (130) einen Bewegungsbereich in vertikaler Richtung Z zwischen einer vollständig angehobenen und eingefahrenen Position und einer vollständig abgesenkten und ausgefahrenen Position von zwischen 40 und 70 cm aufweist.

10. Roboterprobenhandhabungsvorrichtung (100) nach einem der vorhergehenden Ansprüche, wobei der Arbeitstisch (105) eine Deckfläche (105s) aufweist, die als Hauptarbeitsbereich zum Halten von Proben dient, und ferner mit einem Ausschnittsbereich (107) versehen ist, der sich bis zur Unterseite des Arbeitstischs erstreckt.

11. Roboterprobenhandhabungsvorrichtung (100) nach einem der vorhergehenden Ansprüche, ferner umfassend eine Greifereinheit (200), die an der Teleskopplatte (150) an einem unteren Bereich davon angebracht ist.

## Revendications

1. Appareil robotisé (100) de manipulation d'échantillons destiné à effectuer des tâches de manipulation d'échantillons dans un environnement de laboratoire, comprenant une table de travail (105) destinée à contenir des échantillons et un bras robotisé (130) qui peut être commandé pour être positionné dans un plan XY horizontal parallèle à la table de travail et le long d'un axe Z vertical perpendiculaire à la table de travail,
le bras robotisé comprenant :
- une partie de boîtier (132) ;
- un ensemble supérieur comprenant une plaque supérieure (133), une plaque de base (135) et un agencement d'au moins une première tige de guidage (136, 137) et d'au moins une deuxième tige de guidage (138), lesdites tiges de guidage s'étendant dans la direction verticale Z entre la plaque supérieure et la plaque de base, l'ensemble supérieur étant monté coulissant sur la partie de boîtier (132) par l'intermédiaire d'au moins un premier palier linéaire correspondant (141, 142) à travers lequel s'étend la première tige de guidage (136, 137) correspondante ; et
- une plaque télescopique (150) montée coulissante sur l'ensemble supérieur du bras robotisé, par l'intermédiaire d'au moins un deuxième palier linéaire correspondant (143, 144) traversé par la deuxième tige de guidage (138) correspondante ;
**caractérisé en ce que** le bras robotisé (130) comprend en outre un élément stabilisateur (160, 260) monté sur la plaque de base (135), l'élément stabilisateur comprenant une première surface de contact (265s) en contact avec un premier côté (150a) de la plaque télescopique et une deuxième surface de contact (275s) en contact avec un deuxième côté (150b) de la plaque télescopique, les premier et deuxième côtés (150a, 150b) définissant ainsi une épaisseur de la plaque télescopique (150).

2. Appareil robotisé (100) de manipulation d'échantillons selon la revendication 1, l'élément stabilisateur (160) étant pourvu de premier et deuxième galets (165, 175) et les première et deuxième surfaces de contact étant respectivement formées par une circonférence extérieure des premier et deuxième galets.

3. Appareil robotisé (100) de manipulation d'échantillons selon la revendication 2, dans lequel l'un des premier et deuxième galets (165, 175) est monté sur l'élément stabilisateur (160) via un axe excentrique (170) et dans lequel :
- l'axe excentrique comprend une partie d'arbre (173) sur laquelle le galet est monté et une partie cylindrique de liaison (171) qui est reçue dans un alésage (167) de montage aménagé dans l'élément stabilisateur ; et
- la partie d'arbre (173) de l'axe excentrique présente un axe central (174) qui est décalé par rapport à un axe central (172) de la partie cylindrique de liaison (171).

4. Appareil robotisé (100) de manipulation d'échantillons selon la revendication 1, l'élément stabilisateur (260) comprenant une première fourche (265) sur laquelle est aménagée la première surface de contact (265s) et comprenant une deuxième fourche (275) sur laquelle est aménagée la deuxième surface de contact (275s).

5. Appareil robotisé (100) de manipulation d'échantillons selon la revendication 4, les première et deuxième fourches (265, 275) étant dans une certaine mesure sollicitées par ressort, de sorte que les première et deuxième surfaces de contact (265s, 275s) correspondantes sont pressées contre les premier et deuxième côtés de la plaque télescopique (150).

6. Appareil robotisé (100) de manipulation d'échantillons selon l'une quelconque des revendications précédentes, l'élément stabilisateur (160) étant monté sur la plaque de base (135) via au moins une ouverture (162) à fente pour permettre un ajustement de position de l'élément stabilisateur par rapport à la plaque de base (135) dans une direction se rapprochant et s'éloignant des premier et deuxième côtés de la plaque télescopique (150).

7. Appareil robotique (100) de manipulation d'échantillons selon l'une quelconque des revendications précédentes, comprenant en outre un système de positionnement (110), le système de positionnement comprenant un axe X et un axe Y, servant à l'ajustement de position du bras robotisé (130) dans les directions X et Y respectivement, l'axe Y étant monté de manière coulissante sur l'axe X et le bras robotisé (130) étant monté de manière coulissante sur l'axe Y.

8. Appareil robotisé (100) de manipulation d'échantillons selon l'une quelconque des revendications précédentes, comprenant en outre un moteur (145) en liaison fixe avec la partie de boîtier (132) du bras robotisé (130) et un pignon (152) entraîné en rotation par un arbre de sortie du moteur (145), le bras robotisé étant en outre pourvu de :
- une courroie active (157) qui engrène avec des dents sur une circonférence extérieure du pignon (152), une première extrémité de la courroie active (155) étant fixée à la plaque supérieure (133) et une deuxième extrémité de la courroie active étant fixée à la plaque de base (135) ; et
- une courroie passive (157) à boucle fermée bouclée autour d'un premier réa (158) monté en rotation sur la plaque supérieure (133) et d'un deuxième réa (159) monté en rotation sur la plaque de base (135) ;
la plaque télescopique (150) étant liée de manière fixe à la courroie passive (157).

9. Système robotisé (100) de manipulation d'échantillons selon l'une quelconque des revendications précédentes, le bras robotisé (130) possédant une plage de déplacement dans la direction verticale Z, entre une position complètement relevée et rétractée et une position complètement abaissée et déployée, comprise entre 40 et 70 cm.

10. Appareil robotisé (100) de manipulation d'échantillons selon l'une quelconque des revendications précédentes, la table de travail (105) présentant une surface supérieure (105s) qui sert de zone de travail principale pour contenir des échantillons, et étant en outre pourvue d'une région découpée (107) qui s'étend jusqu'à une face inférieure de la table de travail.

11. Appareil robotisé (100) de manipulation d'échantillons selon l'une quelconque des revendications précédentes, comprenant en outre une unité de préhension (200) fixée à la plaque télescopique (150) au niveau d'une région inférieure de celle-ci.
